# EUROPÄISCHE PATENTSCHRIFT

(11) **EP 1 703 834 B1**
(45) Veröffentlichungstag und Bekanntmachung des Hinweises auf die Patenterteilung: **23.02.2011**
(21) Anmeldenummer: 04804744.3
(22) Anmeldetag: 09.12.2004
(51) Int. Cl.: A47L 15/42, B03D 1/14

(54) **VERFAHREN ZUM FILTERN VON PARTIKELN AUS EINER FLÜSSIGKEIT IN EINER GESCHIRRSPÜLMASCHINE**
METHOD FOR FILTERING PARTICLES FROM A LIQUID IN A DISHWASHER
PROCEDE DE FILTRAGE DE PARTICULES DANS UN LIQUIDE D'UN LAVE-VAISSELLE

(30) Priorität: 18.12.2003 DE 10359617
(43) Veröffentlichungstag der Anmeldung: 27.09.2006
(73) Patentinhaber: BSH Bosch und Siemens Hausgeräte GmbH, 81739 München (DE)
(72) Erfinder: DEDEGIL, Yavuz, 76133 Karlsruhe (DE); EIERMANN, Rüdiger, 89428 Sygenstein (DE); JERG, Helmut, 89537 Giengen (DE)
(86) Internationale Anmeldenummer: PCT/EP2004/053369
(87) Internationale Veröffentlichungsnummer: WO 2005/058124

(56) Entgegenhaltungen:
- DE-A1- 3 114 663
- US-A- 5 122 267
- PATENT ABSTRACTS OF JAPAN Bd. 2000, Nr. 04, 31. August 2000 (2000-08-31) -& JP 2000 005484 A (SAMSUNG ELECTRON CO LTD), 11. Januar 2000 (2000-01-11)

## Beschreibung

Die Erfindung betrifft ein Verfahren zum-Filtern von Partikeln aus einer Flüssigkeit in.einer Geschirrspülmaschine.

Zum Filtern von Partikeln aus einer Flüssigkeit, insbesondere einer Spülflotte in einer Geschirrspülmaschine sind seit langem mechanische Filter bekannt, die bspw. aus einem Gitternetz oder einer Metallfolie mit Poren bestehen. Die Funktionsweise dieser Filtervorrichtungen wird im wesentlichen durch die Oberflächenbeschaffenheit und die Porengröße des Filters bestimmt. Zum Reinigen dieser starren Filtervorrichtungen kann bspw. eine Strömungsumkehr vorgenommen werden, die etwaige Partikel, die in der Filtervorrichtung haften geblieben sind, entfernt und aus der Geschirrspülmaschine transportiert.

Da die Größe der Poren sowohl die Filterleistung als auch die Reinigbarkeit wesentlich beeinflusst, wird bei den herkömmlichen Geschirrspülmaschinen eine Porengröße gewählt, die sowohl ein Filtern von kleinen Partikeln als auch eine gute Reinigbarkeit gewährleistet. Trotz mehrstufiger Filtervorrichtungen ist es dennoch nicht möglich, bei herkömmlichen Geschirrspülmaschinen feine und feinste Partikel, wie bspw. Speisereste, aus der umgewälzten Spülflotte herauszufiltern. Diese Partikeln werden daher stets mit umgewälzt und gelangen teilweise erst am Ende des Spülprogramms, beispielsweise während des Klarspülens aus dem Umwälzkreislauf in das Abwasser.

Aus der DE 31 14 663 A1 ist eine Geschirrspülmaschine mit einer Anordnung von Sieben in der Ablaufwanne bekannt. Dabei ist die Ablaufwanne schalenförmig ausgebildet und bodenseitig mit einem Ansaugstutzen einer Entleerungspumpe sowie seitlich mit dem Ansaugstutzen einer Umwälzpumpe versehen. Obenseitig ist die Ablaufwanne durch ein trichterförmiges Feinsieb mit großem Öffnungsring abgedeckt, das in seinem Mittelbereich in ein bis zum Ansaugstutzen der Entleerungspumpen reichendes Feinsiebteil übergeht und umfangsseitig von einem weiteren Sieb vorgegeben ist. Damit beim Umwälzen der Spülflüssigkeit im Nebenstrom auch feinste Schmutzpartikel herausgefiltert werden, ist das Siebrohr als Feinstsieb ausgebildet, welches sich mit Abstand zum hülsenförmigen Feinsiebteil vom trichterförmigen Feinsieb bis zu den Ansaugstutzen der Entleerungspumpe umgebenden Wannenboden erstreckt.

Aus der US 5,122,267 A ist ein Filtersystem bekannt zur Entfernung von organischen Verschmutzungen aus Wasser. Die Vorrichtung weist Seitenwände, eine Bodenwand und eine Oberwand mit einem Flüssigkeitseinlass und einem Flüssigkeitsauslass auf. Die Kammer ist in zwei Gebiete geteilt, wobei eine Struktur zum Einführen einer Mischung von verschmutzter Flüssigkeit mit Partikeln und Gasblasen in das erste Gebiet durch die Seitenwandflüssigkeitseinlassöffnung vorgesehen ist, derart, dass die Gasblasen in der Mischung zu dem Oberteil der Kammer aufsteigen können, wobei die Fremdkörperpartikel, die die Flüssigkeit verschmutzen, zu der Oberseite der Kammer durch Oberflächenadhäsion der Gasblasen zum Entfernen durch die obere Öffnung strömen.

Aus der JP 2000 00 5484 A ist ebenfalls eine Vorrichtung zur Verhinderung der Verschmutzung von Wasser bekannt, bei der in einem Behälter mittels einer Einströmvorrichtung Gasblasen erzeugt werden und in eine eine Düse bildende Venturiröhre gesprüht werden, wobei in der Venturiröhre Luft angesaugt wird. Dabei werden hydrophobische Gruppen in einem Reinigungsmittel und hydrophobische Substanzen wie Öl, die nicht in Wasser gebunden werden können, von dem Waschwasser getrennt und in den Blasen eingefangen.

Aufgabe der vorliegenden Erfindung ist es daher, ein Verfahren bereitzustellen, mit dem es möglich ist, feine und feinste Partikel aus der Spülflotte einer Geschirrspülmaschine herauszufiltern.

Diese Aufgabe wird durch das erfindungsgemäße Verfahren mit den Merkmalen gemäß Anspruch 1 gelöst. Vorteilhafte Weiterbildungen der vorliegenden Erfindung sind in dem Unteranspruch 2 gekennzeichnet.

Das erfindungsgemäße Verfahren zum Filtern von Partikeln aus einer Flüssigkeitsmenge, insbesondere der Spülflotte, weist im wesentlichen folgende Schritte auf:
1. In den Behälter wird eine vorbestimmte Menge einer mit einer schaumbildenden Substanz und/oder Reinigungsmitteln versetzten Flüssigkeit eingebracht.
2. Ein gasförmiges Fluid, bspw. atmosphärische Luft, wird durch Öffnungen im Bodenbereich des Behälters geleitet.
3. Das gasförmige Fluid durchströmt aufgrund der unterschiedlichen Dichteverhältnisse rasch die vorbestimmte Menge der mit einer schaumbildenden Substanz und/oder Reinigungsmitteln versetzten Flüssigkeit und bildet eine Schaumschicht aus. Diese Schaumschicht bildet sich schwimmend an der Oberfläche der vorbestimmten Flüssigkeitsmenge im oberen Bereich des Behälters aus.
4. Die mit Partikeln, insbesondere Speiseresten, durchsetzte Spülflotte rieselt durch entsprechende Mittel von oben auf die ausgebildete Schaumschicht, so daß die Partikel in der Schaumschicht verbleiben, während die Flüssigkeit, d.h. die Spülflotte, an den Schaumblasen vorbei bzw: durch diese hindurch strömt und im wesentlichen gereinigt in den mit Flüssigkeit gefüllten Behälter eintritt.
5. Die im wesentlichen feinen und feinsten Partikel sammeln sich in der Schaumschicht und werden zum Schluss des erfindungsgemäßen Verfahrens abgeleitet und durch die Laugenpumpe abgesaugt.

Zweckmäßigerweise wird das Niveau im Behälter über Ventilvörrichtungen oder eine kommunizierende Röhre auf einer Höhe gehalten, so dass die Höhe der Schaumschicht während der Durchführung des erfindungsgemäßen Verfahrens im wesentlichen gleich bleibt. Bei einer anderen Variante des erfindungsgemäßen Verfahrens ist die Dicke der Schaumschicht variierbar, d.h. höhenverstellbar ausgebildet. Durch die Dosierung der schaumbildenden Substanz kann eine unterschiedlich dicke Schaumschicht erreicht werden, die an den, jeweiligen Verschmutzungsgrad der Spülflotte angepasst ist. Wird beispielsweise über die Dosierungsvorrichtung eine sehr geringe Menge der schaumbildenden Substanz in den Behälter gegeben, bildet sich ein ether dünne Schaumschicht aus, die auch nur eine geringe Menge an Partikeln aufnehmen kann. Wird jedoch eine größere Menge der schaumbildenden Substanz in den Behälter gegeben, bildet sich eine dickere Schaumschicht aus, mit der es möglich ist, größere Partikel oder eine größere Anzahl von Partikeln herauszufiltern. Über einen Trübungssensor, der die Trübung der Spülflotte erfasst, lässt sich beispielweise der Bedarf der schaumbildenden Substanz ermitteln und so die Dicke der Schaumschicht regeln.

Es kann zweckmäßig sein, dass die Schaumbildung mittels der aufsteigenden Gasblasen während der Durchführung des erfindungsgemäßen Verfahrens ständig erfolgt oder intervallweise vorgenommen wird. Die mittels erfindungsgemäßem Verfahren und Vorrichtung gereinigte Spülflotte wird über entsprechende Ventil- und Leitungssysteme der Umwälzpumpe zugeführt und kann so zur wesentlichen Einsparung von benötigten Wassermengen führen.

Nachfolgend wird eine bevorzugte Ausführungsform anhand einer Zeichnung näher erläutert.

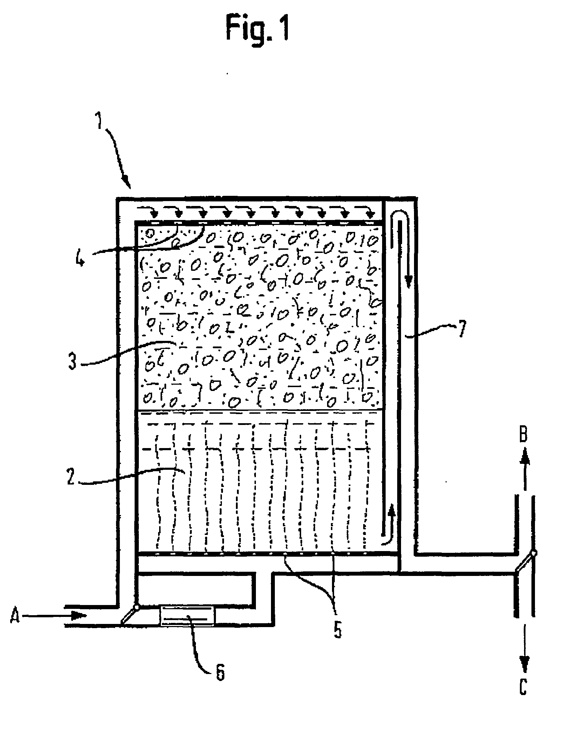

Die Figur 1 zeigt einen Querschnitt durch eine Vorrichtung zur Durchführung des erfindungsgemäßen Verfahrens. Der Behälter 1 ist vorzugsweise im unteren Bereich des Spülbehälters angeordnet, kann jedoch auch in einem anderen Bereich des Geschirrspülers angeordnet sein. In den Behälter 1 wird eine mit einer schaumbildenden Substanz versetzte Flüssigkeit 2 eingebracht und über eine entsprechende Vorrichtung 6 ein gasförmiges Fluid, vorzugsweise atmosphärische Luft, durch Öffnungen 5, die im Bodenbereich des Behälters 1 angeordnet sind, durchströmt. Des Weiteren hat auch die mit Reinigungsmitteln und unter Umständen mit Speiseresten durchsetzte Spülflotte ähnliche Eigenschaften wie eine mit einer schaumbildenden Substanz versetzte Flüssigkeit 2 und somit auch zur Schaumbildung verwendet werden. Die Spülflotte mit Reinigungsmitteln, sowie unter Umständen mit Speisereste angereichert, stellt damit eine mit Reinigungsmitteln versetzte Flüssigkeit 2 dar.

Bei der Durchströmung des gasförmigen Fluids durch die mit einer schaumbildenden Substanz versetzte Flüssigkeit 2 oder der Spülflotte mit Speisereisten bildet sich eine Schaumschicht 3 aus, die an der Oberfläche der mit einer schaumbildenden Substanz versetzten Flüssigkeit oder der Spülflotte mit Speiseresten angeordnet ist.

Über den Weg A wird von der Umwälzpumpe die mit Partikeln, insbesondere Speiseresten, verunreinigte Spülflotte zu den Mitteln 4 transportiert und regnet durch diese als Öffnungen ausgebildeten Mittel 4 auf die Schaumschicht 3, wodurch die in der Spülflotte befindlichen Partikel, insbesondere Speisereste, an den Schaumblasen haften bleiben und die gereinigte Spülflotte in die darunter befindliche schaumbildende Substanz versetzte Flüssigkeit fließt.

Über das Leitungssystem 7 wird die so gereinigte Spülflotte abtransportiert, wobei der gereinigte Anteil über den Weg C zurück in den Spülkreislauf des Pumpentopfs gelangt und nach erfolgter Reinigung der Spülflotte der verunreinigte Schaum und ein Rest der Flüssigkeit entlang Weg C zur Entleerungspumpe fließt und dort entsorgt wird.

## Patentansprüche

1. Verfahren zum Filtern von Partikel aus einer Flüssigkeitsmenge in einer Geschirrspülmaschine, wobei in einem Behälter (1) eine vorbestimmte Menge einer mit einer schaumbildenden Substanz und/oder Reinigungsmitteln versetzten Flüssigkeit (2) von einem gasförmigen Fluid durchströmt und dort eine Schaumschicht (3) ausbildet, auf die die mit Partikeln versetzte Flüssigkeitsmenge herabrieselt und die Partikeln in der Schaumschicht (3) zurückhält während die Flüssigkeitsmenge durch die Schaumschicht (3) hindurchströmt und sich unterhalb dieser Schaumschicht (3) sammelt.

2. Verfahren nach Anspruch 1, wobei der verschmutzte Schaum abgesaugt wird.

## Claims

1. Method for filtering particles from a quantity of liquid in a dishwasher, wherein a predetermined quantity of a liquid (2) mixed with a foam-forming substance and/or cleaning agents is flowed through in a container (1) by a gaseous fluid and forms a foam layer (3) there, on which the quantity of liquid mixed with particles trickles down and the particles are retained in the foam layer (3) whilst the quantity of liquid flows through the foam layer (4) and collects below this foam layer (3).

2. Method according to claim 1, wherein the contaminated foam is sucked away.

## Revendications

1. Procédé de filtrage de particules d'une quantité de liquide dans un lave-vaisselle, une quantité prédéterminée d'un liquide (2) contenant une substance moussante et/ou des agents de nettoyage étant traversée par un fluide gazeux dans un récipient (1) et y formant une couche de mousse (3) sur laquelle la quantité de liquide contenant des particules ruisselle et qui retient les particules dans la couche de mousse (3) tandis que la quantité de liquide traverse la couche de mousse (3) et est collectée en dessous de cette couche de mousse (3).

2. Procédé selon la revendication 1, la mousse encrassée étant aspirée.
